Europäisches Patentamt

(19) European Patent Office

Office européen des brevets

(11) Publication number: 0 048 533
A1

(12) EUROPEAN PATENT APPLICATION

(21) Application number: 81301150.9

(22) Date of filing: 18.03.81

(51) Int. Cl.³: A 23 L 1/31
A 23 J 3/00, A 23 P 1/00

(30) Priority: 31.03.80 US 135736

(43) Date of publication of application:
31.03.82 Bulletin 82/13

(84) Designated Contracting States:
AT BE CH DE FR GB IT LI LU NL SE

(71) Applicant: GENERAL FOODS CORPORATION
250 North Street
White Plains N.Y. 10625(US)

(72) Inventor: Glasser, George Marvin
Spencer Place
Ossining New York 10562(US)

(74) Representative: Baillie, Iain Cameron et al,
c/o Ladas & Parry Isartorplatz 5
D-8000 München 2(DE)

(54) Meat analog fibre formation.

(57) The object of the present invention is to provide a meat analog having a highly distinct fibrous structure.

The successful simulation of natural meats from texturized proteinaceous materials depends to a great extent on its appearance, mouthfeel and chew. Prior art meat analogs prepared by simultaneously elongating and heating a dough containing a heat-coagulable protein have shown good fibrosity. The present invention improves the fibrous structure of products of this type by employing in the dough a modified cellulose which is soluble at a temperature below the heat-coagulation temperature of the protein in the dough but is insoluble at the heat coagulation temperature. The resulting product exhibits a more distinctly fibrous structure.

According to a preferred embodiment, the dough contains hydroxypropyl cellulose and is elongated by means of a heated auger-fed extruder.

EP 0 048 533 A1

TITLE MODIFIED see front page.

## DESCRIPTION

## NOVEL ANALOG FIBER FORMATION

### Technical Field

The present invention relates to meat analogs prepared by simultaneously heating and elongating a heat-coagulable-protein-containing dough, and particularly to an improved composition and process for preparing them.

Much attention is being addressed to preparing meat-simulating products to provide economically and ecologically efficient substitutes for natural meats. These meat analogs can be free of animal protein or can contain meat, fish, egg and dairy proteins as is dictated by flavor, economy or end use. A principal feature of meat analogs is the presence of a fibrous structure which simulates the chew and/or the appearance of real meat. While the prior art has had considerable success in producing fibrous structures, further improvement is required to more closely simulate meat.

### Background Art

There are a wide variety of processes capable of texturizing proteinaceous materials to prepare meat analogs. In some of these fibers are formed first and bound together. According to those processes, the resulting products are highly fibrous, but have an unnatural appearance. Because the fibers are formed into neat bundles, the products resist applied stresses much differently than natural meat fibers and tend to separate too neatly in the direction of fiber orientation. Early products of this type are represented by U.S. Patent 2,682,466 to Boyer and U.S. Patent 2,730,447 to Boyer et al.

Later workers recognized some of the difficulties with preparing realistic meat analogs by this type of procedure and suggested alternatives. Among these is U.S. Patent 3,840,679 to Liepa et al which aggregates a creped sheet instead of individual fibers. These sheets, which comprised series of ridges and depressions, were bound in aggregated form by suitable binders. As one modification of this procedure, non-proteinaceous sheets are formed from starches and gums including cellulose ethers such as methyl cellulose and hydroxypropyl cellulose. These sheets are then bonded with a coagulable protein.

Other processes form the fibers and the binder materials in a single operation by forming a wet dough containing heat-coagulable protein, and simultaneously heating and elongating the dough to form sizable chunks of coagulated proteinaceous material texturized internally by the presence of oriented arrays of fibers. For example, in U.S. Patent 3,693,533 to Liepa, there is disclosed a process employing two heated, converging conveyor belts which heat and elongate proteinaceous dough to form a meat analog. Similarly, in U.S. Patent 3,814,823 to Yang et al, a wet protein dough is heated while being subjected to non-turbulent stretching. Representative of different techniques for obtaining stretching and heating are U.S. Patent 3,866,298 to Hayes, Jr. et al and U.S. Patent 3,886,299 to Feldbrugge et al. In both of these a proteinaceous dough is heated and elongated within an extruder. Hayes, Jr. et al obtain a degree of expansion along with fiber formation, while Feldbrugge et al minimize expansion.

This latter technique of heating and stretching, especially as carried out in an auger-fed extruder, appears to have significant commercial application because of its relative simplicity. There is, however, need for further improvement in fiber formation. All too often the fibers are layered and sheet-like, and too greatly interconnected without enough parallel strand-like fibers as represented in U.S. Patent 3,076,709 to Rivoche.

Disclosure of Invention

The present invention provides meat analogs with improved fibrosity and an improved method and composition for preparing them. The process is an improvement on the prior art procedure of preparing meat analogs by forming a wet dough containing a heat-coagulable protein, and simultaneously heating the dough to coagulate the protein and elongating the dough to provide a heat-set fibrous structure with fibers aligned generally in the direction of elongation, wherein the improvement comprises: uniformly dispersing throughout the dough prior to heating, an aqueous solution of a modified cellulose which is soluble at the temperature of admixing, but insoluble at the heat-coagulation temperature of the protein. The composition for preparing the meat analogs is improved by the presence of the uniformly dispersed solution of the modified cellulose. The product of the process has a greatly improved degree and texture of fibrosity.

Brief Description of Drawings

The present invention will be better understood and its advantages will become more apparent from the following detailed description, especially when read in light of the attached drawings wherein all of the Figures are scanning electronmicrophotographs taken of meat analogs at 100X magnification. The procedure for taking these photographs is as follows: the meat analog is soaked in a solution of methanol and chloroform to remove the fat so as not to obscure the electronmicrograph view of the structure. The analog is then sliced in fresh methanol and dried in a critical point dryer to prevent any surface tensions to the analog. Thereafter the analog is photographed. Figures 1a, 2a and 3a show the indicated perspective of a control product prepared generally as set forth in U.S. Patent 3,886,299 and specifically as set forth in Example 1. Figures 1b, 2b and 3b are taken at like perspectives but show a product prepared according to the present invention, as set forth in Example 1. Both products exited an extruder as flat, elongated strips. The view of the largest flat surface is identified as the top view. The view of the thickness in the direction of elongation is identified as the side view. And, the view perpendicular to the direction of extrusion, as well as the planes of the other two views, is identified as the end view. All of the side and end views are taken of cross sections of the products. The figures show:

The references to the drawings

1a 2a 3a - 1b 2b 3b

are deemed to be deleted (R. 43 EPC)

Figure 1a is a side view of a control product;

Figure 1b is a side view of a product of the invention;

Figure 2a is a top view of a control product;

Figure 2b is a top view of a product of the invention;

Figure 3a is an end view of a control product; and

Figure 3b is an end view of a product of the invention.

Description of the Invention

The invention is described here with specific reference to an extrusion process wherein a moist dough comprising a heat-coagulable protein is compressed into a unitary body within a chamber of decreasing volume. The chamber is formed by a heated outer wall and an internally rotating auger. The volume of the chamber per unit of length decreases in the direction of product advance to cause elongation of the dough in that direction. This is the best mode presently contemplated for carrying out the invention; however, any other procedure which simultaneously heats and elongates such a dough to form a heat-set fibrous structure with fibers aligned generally in the direction of elongation, would also be suitable.

The meat analogs formed may be further processed by drying, hydrating, infusing with intermediate

The references to the drawings
1a 2a 3a - 1b 2b 3b
are deemed to be deleted (R. 43 EPC)

moisture food preservatives, or any other art recognized technique. The products can be employed to simulate meat, fowl or seafood products and can be flavored or colored as desired.

The wet dough for preparing meat analogs is improved according to the invention by uniformly admixing with and dispersing throughout it, a modified cellulose which has the ability to improve fiber forming. It is presently believed that the usefulness of the modified celluloses is related to the property they exhibit of being soluble at lower temperatures employed for mixing but insoluble at the temperatures existing in the extruder wherein the dough is heated and elongated. The modified celluloses contemplated by the invention are defined as water-soluble, non-ionic alkyl ethers of cellulose having the property of forming heat-reversible gels in solution. These cellulose ethers include ethyl cellulose, methyl cellulose, hydroxypropyl cellulose, hydroxypropyl methyl cellulose and hydroxyethyl cellulose. Ionic cellulose ethers such as carboxymethyl cellulose, carboxymethyl, hydroxyethyl cellulose and their salts, which do not have the property of forming gels in aqueous solution upon heating and which have entirely different properties with respect to solution-formation and the like, are excluded by this definition. Unlike solutions of other gelforming materials such as gelatin, alginates, pectinates and the like, which provide harder gels as their temperature is lowered, solutions of the alkyl cellulose ethers contemplated by the invention remain fluid until frozen and do not begin gel formation until heated. The preferred forms of modified cellulose materials are the non-ionic cellulose ethers such as methyl cellulose, ethyl cellulose, hydroxypropyl cellulose, hydroxypropyl methyl cellulose.

Particularly preferred are materials selected from the group consisting of methyl cellulose and hydroxypropyl cellulose. The most preferred material is hydroxypropyl cellulose. One acceptable commercial material is hydroxypropyl cellulose as sold under the trademark Klucel® by Hercules Incorporated.

Hydroxypropyl cellulose is the product formed by reacting alkali cellulose with propylene oxide at elevated temperatures and pressures. According to technical information obtained from Hercules Incorporated, the propylene oxide can be substituted on the cellulose through an ether linkage at three reactive hydroxyls present on each anhydroglucose monomer unit of the cellulose chain. This information suggests that etherification takes place in such a way that hydroxypropyl substituent groups contain almost entirely secondary hydroxyls. The secondary hydroxyl is then said to be available for further reaction with the oxide, and chaining-out may take place. This is said to result in formation of side chains containing more than one mole of combined propylene oxide. It is probable that most of the primary hydroxyls on the cellulose have been substituted and that the reactive groups remaining are secondary hydroxyls. The products available under the Klucel® trademark are categorized also by molecular weight as follows: H-type, approximately 1,000,000; G-type, approximately 300,000; L-type, approximately 100,000; and E-type, approximately 60,000. Preferred among these is the high molecular weight H-type which should also be food grade, i.e. HF.

The particular amount necessary to be effective in improving fibrosity will depend upon the chemical makeup of the modified cellulose as well as the molecular weight. Therefore, there is no one range of universal applicability. With the more preferred dough compositions, and using Klucel® type-HF hydroxypropyl cellulose, levels within the range of from about 0.05 to about 2.0% can be used effectively. For other materials, levels as high as about 5% may be necessary. Preferred levels will be within the range of from about 0.1 to about 0.5%, and most preferably within the range of from about 0.2 to about 0.4%. All of these percentages are based on the total weight of the dough.

Hydroxypropyl cellulose is soluble at temperatures employed for mixing the dough, but is insoluble at more elevated temperatures and precipitates from solution during heating and elongation in the extruder. The exact reason why improved fibrosity is achieved is not fully understood; however, it is believed that as the precipitation occurs during elongation, pockets of proteinaceous dough are separated from the mass and become elongated into distinct fibers oriented in the direction of elongation. The Kucel® is viewed as assisting in the formation of fibers. It acts as a fiber forming medium which molds or guides the protein during denaturization rather than acting as a binding agent which holds the fibers together. This is only a theory, however, and applicant does not wish to be bound to it. Whatever the mechanism, the well- defined fibers are not totally separate from each other but remain interconnected in a net-like array throughout. Advantageously, the hydroxypropyl cellulose precipitates from solution at a temperature of about $40^{\circ}$ to $45^{\circ}$ C, prior to heat-coagulation of the protein in the dough but also well above the normal mixing temperature.

In addition to the modified cellulose which is dispersed throughout, the dough will contain a sufficient amount of water to render it plastic and capable of being elongated to form an internal fibrous structure, and it will also contain sufficient heat-coagulable protein in sufficient quantity and of sufficient quality to be capable of forming a dough which can be stretched and pulled or elongated into a fibrous structure.

The concentration of the protein necessary for fiber formation will vary according to the quality and source of the protein. Raw meat, fish and vegetable protein materials can be employed. Suitable vegetable protein sources are soy bean meal, peanut meal, cottonseed or other vegetable protein materials generally recovered as by-products from oil extraction. Full fat proteinaceous sources may be employed but concentrated sources of the protein material are preferred to maximize the protein content of the dough. The muscle of animals, flesh of fish, soy isolate, gluten, albumen, dairy products such as dry milk powder, whey and the like, wheat flour and other protein sources are useful. Cheap meat, poultry or fish not having utility for direct sale to consumers such as poultry paste recovered from laying chickens are a preferred source of animal protein. Proteins such as protein isolates, defatted soy flour and particularly wheat gluten are preferred vegetable derived proteinaceous sources.

Proteinaceous materials are sub-divided (preferably flours of these materials are employed) and mixed to form a moist dough having a moisture content of between 20 percent to 65 percent water, total weight basis. Flours having a particle size 80 mesh or finer, are particularly good for forming a uniform initial dough. Where meat materials are employed, it may be necessary to partially dehydrate the meat by known drying methods or mix the meat with dry vegetable protein sources of other materials, to reduce the moisture content required for processing. Of course, heat treatment on drying of meat or fish will cause denaturization and therefore, it is preferred to employ meat only as an additive or supplementary source of protein to dry vegetable protein which will comprise a major portion of the dough.

Gluten is the preferred vegetable-derived protein. It is generally preferred to employ a minimum concentration in the dry mix of about 20 percent to a maximum of about 75 percent wheat gluten. The upper limit is dictated by the inability to mix compositions containing a greater amount of gluten while the lower concentration has been found to produce little fiber formation in the absence of other heat coagulable proteins. The lower levels of gluten or no gluten at all may be employed provided the dry weight basis of fiber forming, heat coagulable protein is maintained above 35 percent by weight (dry basis) of the dough.

Oil seed flakes are not employed in the process of this invention. We have found that flakes or coarsely ground oil seed can appear in the final heat treated product in its original particulate form thus detracting from the fibrous character of the product. While some carry through is evident when soy grits are employed (Soyabits) the grits produce an acceptable product. It is preferred, however, to employ protein flours having a particle size less than 80 mesh. Furthermore, while water soluble protein (WSP) or nitrogen solubility index (NSI) of the protein can range from 25 to 85, we prefer to employ protein, particularly soy having an NSI of 50 or above, preferably 60 - 75.

Other materials may be mixed with the proteins. For example, carbohydrates such as starch fillers, colors, fats and other flavoring ingredients may be added to the proteinaceous material. Wheat flour has been found to be an extremely useful additive since it provides some gluten useful in fiber development and is readily cooked and gelatinized during the process to produce a desirable flavor and texture in the product. However, defatted soy bean flour also provides sufficient carbohydrates and a better protein value in the finished product.

The proteinaceous materials, fillers, modified cellulose and other additives are mixed with water to form a dough. The ingredients should be mixed in a heavy duty mixer such that at least some fibers are visually apparent when the dough is pulled. The dough can be a single mass such as that produced in the pastry art or can be particulate such as that produced in the pasta art. The moisture content of the dough may vary within limits of from 20 percent to 65 percent by weight but preferably is maintained at about 25 percent to 50 percent by weight for doughs containing a major amount of vegetable protein. It is important to mix the material with water sufficient to as uniformly as possible distribute the water in the proteinaceous material.

The fibrous character of the product is developed and set by subjecting the moist fibrous proteinaceous dough to compression in a chamber of decreasing volume formed by a heated outer wall and rotating auger (screw) such that the pressure exerted by the reduction in volume as the outlet of the chamber is approached has densified the dough but does not cause substantial expansion. The compression forces the dough into a dense unitary body conforming to the chamber formed between the screw and the wall. The compression removes voids, expels air and forms a dense proteinaceous mass. Simultaneously, the compression against the heated outer wall allows rapid heat transfer into the mass plasticizing the mass as it is forced towards the outlet of the extruder. The continuous turning of the screw, the resistance of the heated wall and the volume reduction cause a stretching of the plastic mass forming a fibrous texture which is usually aligned in the direction of the channel of the screw. Simultaneously, the protein fibers are heated to the point of forming a heat irreversible proteinaceous mass. The fibers are thus simultaneously stretched and oriented normal to the heated surface. The heat set fibers are then expelled from the extruder preferably without puffing, to retain the dense meatlike structure formed within the extruder.

0048533

Formation of the fibers is conveniently done by feeding a premixed dough to an extruder of the type normally employed in the plastics industry having a minimum clearance between the periphery of the screw and the heated wall and preferably having a minimum clearance between the base of the channel formed by the flights of the screw and the heated wall. By this design, the heat transfer surface area to volume of the protein mass being treated is maximized. The extruder should be designed to provide a reduction in volume from feed to discharge in the screw channel, of from 1 to 10 fold, preferably 1 to 5 fold.

The wall is normally heated to a temperature of at least $120^{\circ}$C and preferably to an average temperature of $135^{\circ}$C or greater. It is preferred to employ multiple zones of heat to provide proper temperature conditions throughout the barrel of the extruder. Thus the zone near the inlet of the extruder may be heated to at least $120^{\circ}$C and then one or more zones closer to the outlet may be heated to a temperature of $135^{\circ}$C or greater. The heated surface cooks the carbohydrate content of the dough and raises the temperature of the dough to a point where the protein coagulates. Simultaneously, the screw rotating in relationship to the heated wall causes a stretching effect aligning the material within the screw channel as the protein is being coagulated. The rotating screw and heated wall are closely aligned to limit slippage or backmixing during stretching and coagulation of the fibers.

The minimum speed of screw rotation is determined by the speed necessary for a given extruder to prevent charring or browning of the proteinaceous material being treated. The exact operating conditions are not critical, provided sufficient reduction in volume is available to insure proper compression to a dense mass by stretching and coagulation of the protein. If desired, the screw of the extruder may be heated to further increase the surface area present for a given mass of proteinaceous material, and may be further designed to provide a first mixing stage wherein the temperature of the proteinaceous mass is increased to a point incipient to coagulation whereupon the screw is designed to provide a reduction in volume to compress, elongate, and orient the protein during coagulation. The first mixing stage may also be employed to mix ingredients to form the fibrous dough. Thus large amounts of material may be mixed initially in deep flights in a screw. Upon formation of the dough and reaching coagulation temperature the volume of the screw channel reduces to maximize the heated surface to mass relation during elongation and coagulation of the protein.

The present invention contemplates using an open ended extruder as well as employing a high pressure rope extruding die plate at the end of the extruder. The die plate would allow a rope type analog to be formed rather than a ribbon type analog from an open ended extruder. This would facilitate the replication of shrimp like structure.

Best Mode For Carrying Out The Invention

The following examples are presented for the purpose of further illustrating and explaining the present invention, and are not be taken as limiting in any regard. Unless otherwise indicated, all parts and percentages are given by weight.

- 15 -

## Example 1

According to this example, a product is prepared according to the present invention, employing a modified cellulose intimately admixed with a protein dough to improve fibrosity, and is compared to a control product made by prior art procedures not employing the modified cellulose.

To prepare the product of the invention and the control product the following materials were dry blended:

| Ingredient | Parts by Weight |
| --- | --- |
| Wheat Gluten | 30 |
| Soy Fluff | 55 |
| Hard Wheat Flour | 15 |

Doughs for preparing the product of the invention and the control product were then prepared by mixing about 3600 grams of the above dry blended materials with about 2070 grams of the appropriate aqueous flavor solution:

A.  Aqueous flavor solution for product of the invention:

| Ingredient | Parts by Weight |
| --- | --- |
| Flavor (oil based) | 26.1 |
| Tween® 60= by ICI Corporation, Delaware | (Trace) |
| Span® 40= by ICI Corporation, Delaware | (Trace) |
| Klucel®-HF hydroxypropyl cellulose | 0.6 |
| Water | 73.3 |

B.   A control product was prepared without any Klucel®-HF (hydroxypropyl Cellulose) and without any flavor solutions. The moisture content was adjusted accordingly to approximate the analog prepared with Klucel® and flavors as shown in Example IA. The flavor solution was deleted because without the modified cellulose, the oil was expressed from the meat analog matrix due to the high pressures and lack of chemical and mechanical holding. Mere aqueous flavor solutions were not employed because they vaporized out of the meat analog.

These materials were extruded in a Prodex Torque Master II single screw plastics extruder having a 2.5 inch (6.35 cm) barrel and a length to diameter ratio of 30:1 and a compression ratio of 5.6 to 1. The five heating zones were set to approximately 96°C, 191°C, 191°C, 191°C and 113°C and the screw speed was set to approximately 30 rpm. Through put was approximately between 23 to 45 Kgs/hr. The resulting products were then prepared for scanning electron photomicrography as described above. The results are shown in the Figures.

#### Example 2

The procedure of Example 1 for preparing a product of the invention is repeated, but this time methyl cellulose is employed in place of the hydroxypropyl cellulose.

#### Example 3

The procedure of Example 1 for preparing a product of the invention is repeated, but this time fresh beef with a moisture content of approximately 51% is employed in place of 10 parts of the Soy Fluff. The wheat gluten and flavor remain the same and the final moisture content of the analog is adjusted to be approximately 38%.

The above disclosure is presented for the purpose of teaching those skilled in the art how to practice the present invention and does not attempt to describe all those modifications and variations of the invention which will become apparent to those skilled in the art upon reading the disclosure. It is intended, however, that all such modifications and variations be included within the scope of the invention which is defined by the following claims.

CLAIMS

1.   A process for preparing meat analogs by forming a wet dough containing a heat-coagulable protein, and simultaneously heating the dough to coagulate the protein and elongating the dough to provide a heat-set fibrous structure with fibers aligned generally in the direction of elongation, characterised by uniformly dispersing throughout the dough prior to heating, an aqueous solution of a modified cellulose in an amount of from 0.05 to 2% based on the total weight of the dough, which is soluble at the temperature of admixing, but insoluble at the heat-coagulation temperature of the protein.

2.   An improved process according to claim 1 wherein the modified cellulose comprises a nonionic cellulose ether.

3.   An improved process according to either of claims 1 and 2 wherein the modified cellulose is employed in an amount of from 0.1 to 0.5% based on the total weight of the dough.

4.   An improved process according to any one of claims 1 to 3 wherein the dough has a moisture content within the range of from 20 to 65% based on the total weight of the dough.

5.   An improved process according to any one of claims 1 to 4 wherein the  protein content of the dough is at least 35% based on the dry weight of the dough.

6.   An improved process according to any one of claims 1 to 5 wherein the dough is compressed in a chamber formed by the channel of an auger rotating within an outer wall heated to a temperature of at least 120$^o$C, and wherein the volume of the chamber per unit length decreases from the feed to the discharge end to thereby elongate the dough in the direction of its advance through the chamber while the dough is heated sufficiently to coagulate the heat-coagulable protein.

7.   An extruded, non-puffed, heat-set fibrous structure with fibers aligned in the direction of elongation which simulates the chew and appearance of real meat comprising water, stretched and elongated heat coagulated protein dough that has been compressed in a chamber formed by the channel of an auger rotating within an outer wall heated to a temperature of at least about 120$^{\circ}$C, and wherein the volume of the chamber per unit length decreased from the feed to the discharge end to thereby elongate the protein dough in the direction of its advance through the chamber while the protein dough was heated sufficiently to coagulate the coagulable protein and modified cellulose, selected from the group consisting of hydroxypropyl cellulose, methyl cellulose and combinations thereof.

8. An extruded, non-puffed, heat-set fiber structure according to claim 7 wherein the modified cellulose comprises hydroxypropyl cellulose.

9. An extruded, non-puffed, heat-set fiber structure according to either of claims 7 and 8 wherein the modified cellulose is employed in an amount within the range of from about 0.05 to about 2% based on the total weight of the protein dough.

10. An extruded, non-puffed, heat-set fiber structure according to any one of claims 7 to 9 wherein the modified cellulose is employed in an amount within the range of from about 0.01 to about 0.5% based on the total weight of the protein dough.

## EUROPEAN SEARCH REPORT

European Patent Office

| Category | DOCUMENTS CONSIDERED TO BE RELEVANT<br>Citation of document with indication, where appropriate, of relevant passages | Relevant to claim |
|---|---|---|
| | DE - A - 2 254 613 (UNILEVER N.V.)<br>* claims 1, 4, 6; page 5, paragraph 3 *<br>& GB - A - 1 414 131<br>— | 1,2 |
| | FR - A - 2 182 188 (PROCTER & GAMBLE CO.)<br>* claims 1, 11; pages 24, 25, example 4 *<br>& GB - A - 1 418 778<br>— | 1,2 |
| | US - A - 4 021 584 (M.M. RANKOWITZ)<br>* claim 1 *<br>— | 1 |
| | US - A - 4 125 635 (P.W.A. DE RUYTER)<br>* claims 1, 6 *<br>— | 1 |
| D | US - A - 3 814 823 (J.H. YANG et al.)<br>— | |
| D | US - A - 2 730 447 (R.A. BOYER)<br>— | |
| D | US - A - 2 682 466 (R.A. BOYER)<br>— | |
| A | FR - A - 2 164 628 (GENERAL FOODS CORP.)<br>& US - A- 4 031 267<br>——— | |

**CLASSIFICATION OF THE APPLICATION (Int. Cl.³)**

A 23 L 1/31
A 23 J 3/00
A 23 P 1/00

**TECHNICAL FIELDS SEARCHED (Int. Cl.³)**

A 23 J 3/00
A 23 L 1/00
A 23 P 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 06-07-1981 | SCHULTZE |

EPO Form 1503.1 08.78